# EUROPEAN PATENT APPLICATION

(11) **EP 2 665 148 A1**
(43) Date of publication of application: **20.11.2013**
(21) Application number: 12168508.5
(22) Date of filing: 18.05.2012
(51) Int. Cl.: H02G 15/113, G02B 6/44

(54) **Cable closure**

(71) Applicant: CCS Technology, Inc., Wilmington, DE 19803 (US)
(72) Inventor: Breuer-Heckel, Mike, Dipl.-Ing., 44143 Dortmund (DE); Badura, Stefan, Dipl.-Ing., 58708 Menden (DE); Kittler, Lars, Dipl.-Ing., 58239 Schwerte (DE)
(74) Representative: Sturm, Christoph

(57) **Abstract**

A cable closure, having a housing, which delimits an interior of the cable closure and seals off the cable closure toward the outside, the housing comprising a covering body (13), the covering body (13) comprises shells (11, 12) and provides on mutually opposite sides (15) of the same cable insertion regions (17) for inserting cables into the interior of the cable closure and/or for passing cables out of the interior of the cable closure, wherein compressible and/or deformable sealing elements (16) are positioned at the mutually opposite sides (15) of the covering body (13) in the region of the cable insertion regions (17) of the shells (11, 12), and wherein the shells (11, 12) can be locked together in a closed status of the cable closure by a closing mechanism, wherein the shells (11, 12) are hinged together at first sides (18, 19) so that the shells (11, 12) can be pivoted relative to each other when opening and closing the cable closure, and that the closing mechanism (23) can be used to lock the shells (11, 12) to each other at second sides (21, 22) of the same when the shells (11, 12) are in the closed position. The closing mechanism (23) comprises at least one locking segment (24) having a locking latch (25) and a latch support (26), wherein the latch support (26) is with a first end section (27) pivotably attached to a first one of the shells (11), and wherein the latch support (26) is with a second end section (28) pivotably attached to the locking latch (25), wherein the locking latch (25) has a first end section (29) acting together with a second one of the shells (12) when closing and opening the cable closure, and wherein the locking latch (25) has a second end section (30) serving as an actuating handle for closing and opening the cable closure.

## Description

The present patent application relates to a cable closure in accordance with the preamble of claim 1.

Cable closures are used in telecommunications cable networks for protecting spliced joints at connection points between two telecommunications cables and for protecting branch points or splitting points of telecommunications cables. In this case, the cable closures need to ensure the continuity of the telecommunications cables as though the telecommunications cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, the housing comprising a covering body, the covering body comprises shells and provides on mutually opposite sides of the same cable insertion regions for inserting cables into the interior of the cable closure and/or for passing cables out of the interior of the cable closure. Compressible and/or deformable sealing elements are positioned at the mutually opposite sides of the covering body in the region of the cable insertion regions of the shells, wherein each of the sealing elements is positioned between barrier walls of the respective shell, namely between a barrier wall facing the interior of the cable closure and a barrier wall remote from the interior of the cable closure.

According to DE 20 2010 006 582 U1 the inline cable closure comprises a closing mechanism by which the shells can be locked together in a closed status of the cable closure, whereby the closing mechanism comprises clip-like fastening elements and fastening screws extending through the two shells.

WO 2008/051671 A1 discloses another inline cable closure according to the prior art. The inline cable closure according to WO 2008/051671 A1 comprises the features of the preamble of claim 1.

Against this background, the present patent application provides a novel cable closure having improved closing mechanism.

This is accomplished by cable closure as defined in claim 1.

The closing mechanism of the novel cable closure comprises at least one locking segment having a locking latch and a latch support, wherein the latch support is with a first end section pivotably attached to a first one of the shells, and wherein the latch support is with a second end section pivotably attached to the locking latch, wherein the locking latch has a first end section acting together with a second one of the shells when closing and opening the cable closure, and wherein the locking latch has a second end section serving as an actuating handle for closing and opening the cable closure.

The closing mechanism of the novel cable closure works easy under various conditions and allows an opening and closing of the closure by hand without the need of an extra tool. The closing mechanism ensures an easy reopening when access is needed to the interior of the closure e.g. when splice work has to be performed. In addition to the easy handling, the closing mechanism of the novel cable closure locks the closure save and permanent.

The force needed to close the closing mechanism depends on the number and size of cables handles in the cable insertion regions. The closing mechanism offers two lock-in positions which decreases the closing forces needed during operation with the cable closure.

Preferably, the latch support is with the second end section pivotably attached to a section of the locking latch having a shorter distance to the first end section of the locking latch than to the second end section of the same. This allows to further decrease the closing forces needed during operation with the closure.

Preferably, the first end section of the locking latch comprises a recess and a protrusion, wherein the protrusion provides a free end of the locking latch, wherein the recess is positioned between the protrusion and the section of the locking latch to which the second end section of the latch support is pivotably attached.

In a first lock-in position of the respective locking segment of the closing mechanism a protrusion of the second one of the shells projects into the recess of first end section of the locking latch thereby fixing the relative position of the shells in a partially closed position of the same. In a second lock-in position of the respective locking segment of the closing mechanism the protrusion of the first end section of the locking latch projects into a recess of the second one of the shells thereby fixing the relative position of the shells in a fully closed position of the same. The respective locking segment is transferable between the first lock-in position and the second lock-in position and vice versa between the second lock-in position and the first lock-in position by applying a force to the second end section of the locking latch and by pivoting to the second end section of the locking latch. Such a design is simple and reliable.

Exemplary embodiments of the present invention will be explained in more detail, without any restriction being imposed, with reference to the drawing, in which:
- Figure 1: shows a side view of a preferred exemplary embodiment of a cable closure in form of an inline cable closure in a partially closed status of the same;
- Figure 2: shows a side view of the preferred embodiment of the cable closure in a completely closed status of the same;
- Figure 3: shows a perspective view of the preferred embodiment of the cable closure in the partially closed status of the same;
- Figure 4: shows a perspective view of the preferred embodiment of the cable closure in the completely closed status of the same;

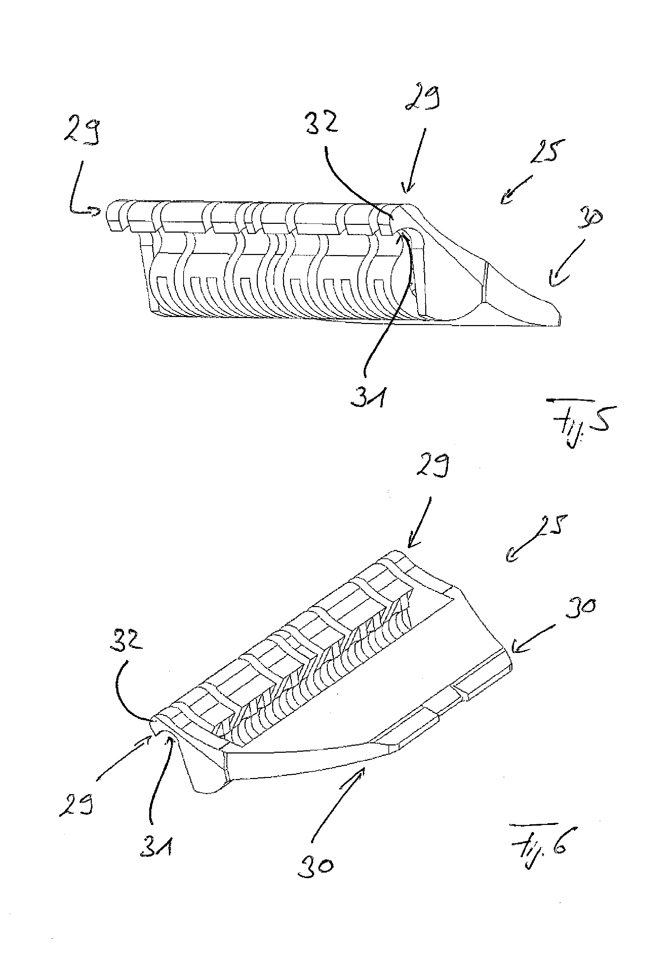

- Figure 5: shows a first detail of the closing mechanism of the cable closure of Figures 1 to 4 in a first perspective view;
- Figure 6: shows the first detail in a second perspective view;

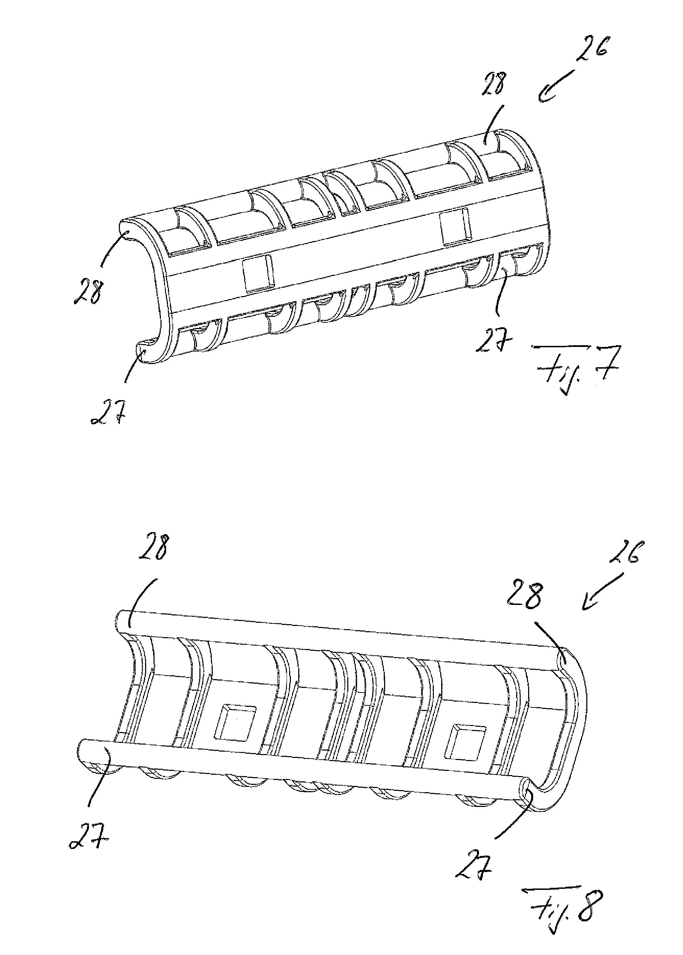

- Figure 7: shows a second detail of the closing mechanism of the inline cable closure of Figures 1 to 4 in a first perspective view;
- Figure 8: shows the second detail in a second perspective view;
- Figure 9: shows another detail of the closing mechanism of the inline cable closure of Figures 1 to 4.

The present invention relates to a cable closure 10, which in the preferred exemplary embodiment shown is an inline cable closure comprises a housing which is formed by a covering body 13 composed of two shells 11 and 12.

In the exemplary embodiment shown, the shells 11 and 12 are half-shells and the half-shell 11 is a so-called lower shell and the half-shell 12 is a so-called upper shell of the covering body 13, which together define an interior 14 of the inline cable closure 10.

Cable insertion regions 17 are formed on mutually opposite sides 15 of the inline cable closure 10 or the covering body 13, with it being possible for cables to be inserted into the interior 14 of the inline cable closure 10 or passed out of the interior. In the exemplary embodiment shown, in each case two cable insertion regions 17 for inserting in each case one cable into the interior 14 of the inline cable closure 10 are formed on both mutually opposite sides 15 of the covering body 13.

In the shown embodiment, the two half-shells 11 and 12 are hinged together at first sides 18, 19 of the same. In the example embodiment the first sides 18, 19 are longitudinal sides of the shells 11, 12. The half-shells 11 and 12 can be pivoted with respect to each other around a hinge 20 by which the two half-shells 11 and 12 are fixed to each other at the first longitudinal sides 18, 19 of the same.

When the inline cable closure 10 is closed, second sides 21, 22 of the two half-shells 11 and 12 can be locked to each other by a closing mechanism 23. In the example embodiment the second sides 21, 22 are other longitudinal sides of the shells. The closing mechanism 23 will be described below in greater detail.

In order to ensure that the cables to be inserted into the interior 14 of the inline cable closure 10 via the cable insertion regions 17 are sealed off, compressible and/or deformable sealing elements 16, which are each arranged between barrier walls (not shown), are positioned in the region of both mutually opposite sides 15 of the covering body 13 of the inline cable closure 10 on which the cable insertion regions 17 are formed, both in the region of the lower half-shell 11 and in the region of the upper half-shell 12.

The compressible and/or deformable sealing elements 16 are preferably gel-like sealing elements, for example polyurethane gels or silicone gels. Such gel-like sealing elements are deformable and can be compressible.

As mentioned above, the half-shells 11, 12 of the covering body 13 are hinged together at the first longitudinal sides 18, 19 so that the two half-shells 11, 12 can be pivoted relative to each other around an axis or hinge 20 running parallel to the longitudinal sides 18, 19 when opening and closing the cable closure 10.

The closing mechanism 23 can be used to lock the half-shells 11, 12 of the covering body 13 to each other at second longitudinal sides 21, 22 of the same when the half-shells 11, 12 of the covering body 13 are in the closed position.

The closing mechanism 23 comprises at least one locking segment 24 having a locking latch 25 and a latch support 26. Preferably, the closing mechanism 23 comprises at least two locking segments 24 being positioned side by side and being individually lockable and un-lockable.

The latch support 26 of the respective locking segment 24 is with a first end section 27 pivotably attached to a first one of the shells, namely in the shown embodiment to the so-called lower half-shell 11. Further on, the latch support 26 is with a second end section 28 pivotably attached to the locking latch 25. In the shown embodiment, the latch support 26 has a curved cross-section, for example a C-shaped or U-shaped cross-section, whereby the end sections 27, 28 of the same are provided by legs of the C-shaped or U-shaped latch support 26. The locking latch 25 of the respective locking segment 24 has a first end section 29 acting together with a second one of the shells, namely in the shown embodiment to the so-called upper half-shell 12, when closing and opening the cable closure 10. Further on, the locking latch 25 has a second end section 30 serving as an actuating handle for closing and opening the cable closure 10.

The latch support 26 of the respective locking segment 24 is with the second end section 28 pivotably attached to a section of the locking latch 25 having a shorter distance to the first end section 29 of the locking latch 25 than to the second end section 30 of the same. In the shown embodiment, the section of the locking latch 25 to which the second end section 28 of the latch support 26 is pivotably attached, is positioned immediately adjacent to the first end section 29 of the locking latch 25.

The first end section 29 of the locking latch 25, which acts together with a second one of the shells 12 when closing and opening the cable closure 11, comprises a recess 31 and a protrusion 32. The protrusion 32 provides a free end of the locking latch 25. The recess 31 is positioned between the protrusion 32 and the section of the of the locking latch 25 to which the second end section 28 of the latch support 26 is pivotably attached.

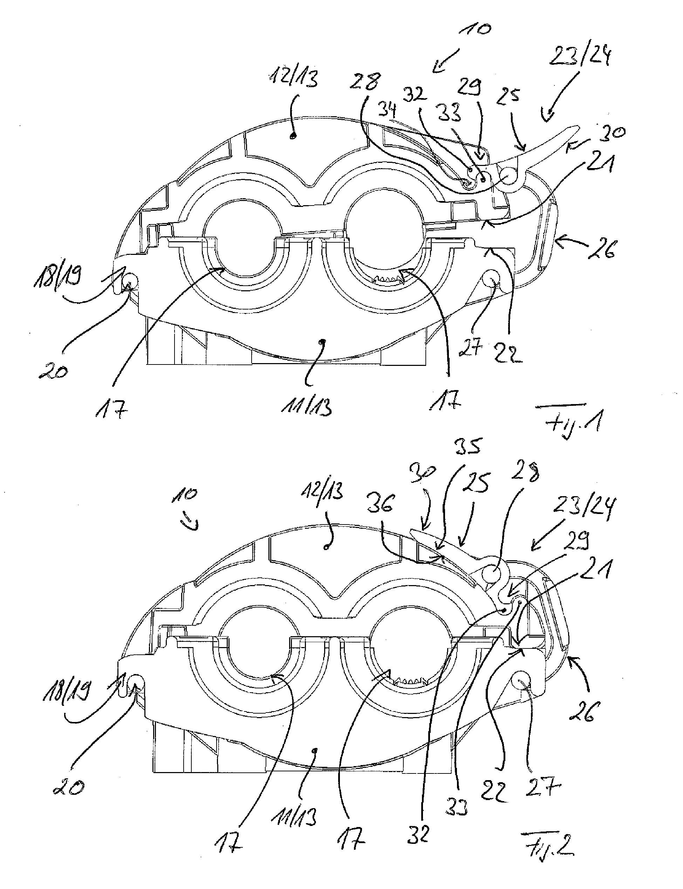

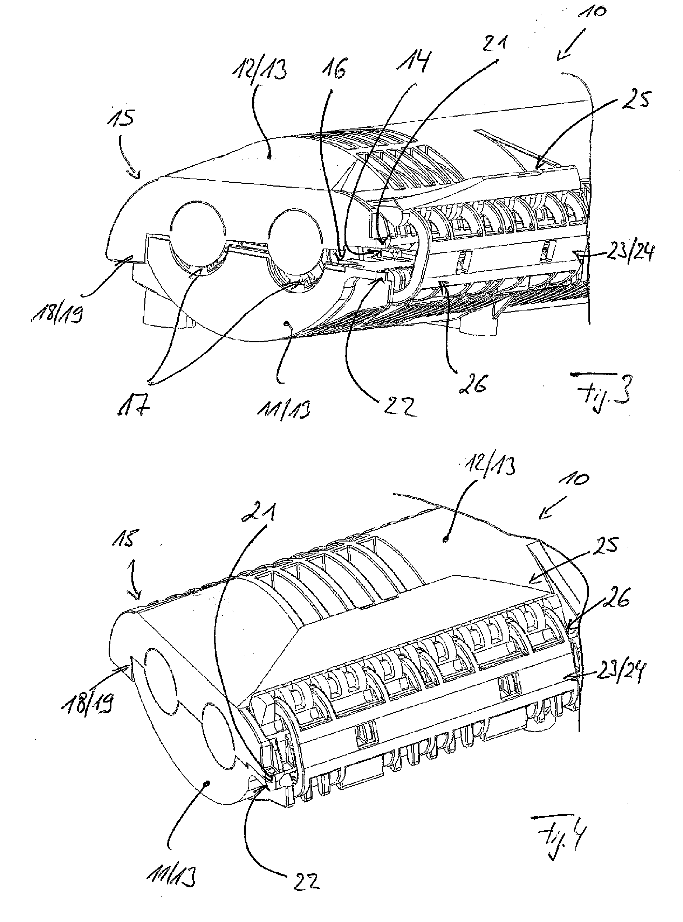

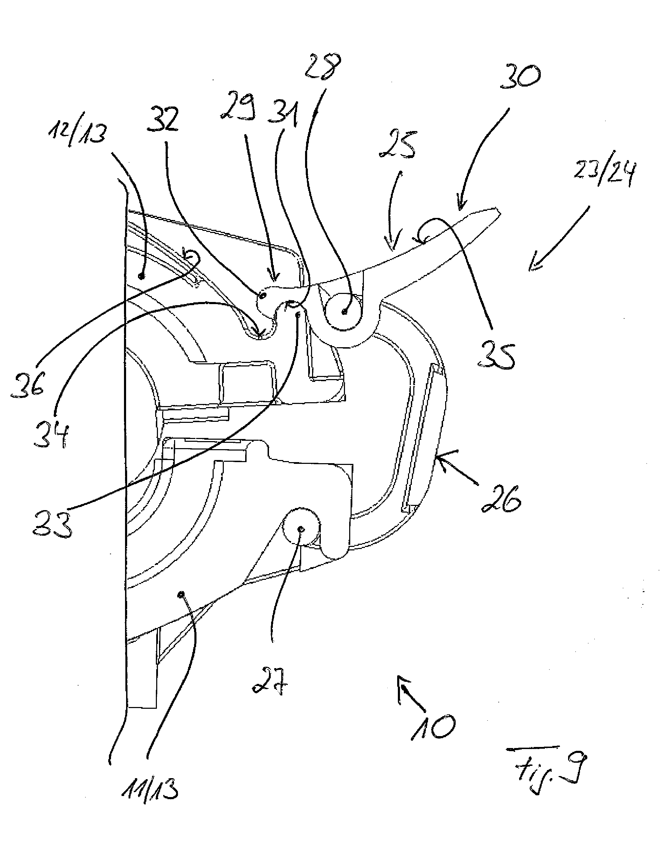

In a first lock-in position of the respective locking segment 24 of the closing mechanism 23 (see Figures 1, 3 and 9) a protrusion 33 of the second one of the shells 12 projects into the recess 31 of first end section 29 of the locking latch 25 thereby fixing the relative position of the shells 11, 12 in a partially closed position of the same. In that in a second lock-in position of the respective locking segment 24 of the closing mechanism 23 (see Figures 2 and 4) the protrusion 32 of the first end section 29 of the locking latch 25 projects into a recess 34 of the second one of the shells 12 thereby fixing the relative position of the shells 11, 12 in a fully closed position of the same.

The respective locking segment 24 of the closing mechanism 23 is transferable between the first lock-in position (see Figures 1, 3 and 9) and the second lock-in position (see Figures 2 and 4) and vice versa between the second lock-in position and the first lock-in position by applying a force to the second end section 30 of the locking latch 25 and by pivoting the second end section 30 of the locking latch 25.

For transferring the respective locking segment 24 of the closing mechanism 23 from the first lock-in position (see Figures 1, 3 and 9) into the second lock-in position (see Figures 2 and 4) the locking latch 25 is pivotable around an axis defined by the protrusion 33 of the second one of the shells 12 and the recess 31 of first end section 29 of the locking latch 25.

During this transfer of the locking segment 24 from the first lock-in position (see Figures 1, 3 and 9) into the second lock-in position (see Figures 2 and 4) the protrusion 32 of the first end section 29 of the locking latch 25 becomes engaged with the recess 34 of the second one of the shells 12 while the protrusion 33 of the second one of the shells 12 becomes disengaged with the recess 31 of first end section 29 of the locking latch 25.

For transferring the respective locking segment 24 of the closing mechanism 23 from the second lock-in position (see Figures 2 and 4) into the first lock-in position (see Figures 1, 3 and 9) the locking latch 25 is pivotable around an axis defined by the protrusion 32 of the first end section 29 of the locking latch 25 and the recess 34 of the second one of the shells 12.

During this transfer of the locking segment 24 from the second lock-in position (see Figures 2 and 4) into the first lock-in position (see Figures 1, 3 and 9) the protrusion 33 of the second one of the shells 12 becomes engaged with the recess 31 of first end section 29 of the locking latch 25 while the protrusion 32 of the first end section 29 of the locking latch 25 becomes disengaged with the recess 34 of the second one of the shells 12.

In the second lock-in position of the respective locking segment 25 of the closing mechanism 23 (see Figures 2 and 4) a surface 35 of the second end section 30 of locking latch 25 contacts a surface 36 of the second one of the shells 12.

In the first lock-in position of the respective locking segment 25 of the closing mechanism 23 the partially opened or partially closed shells 11, 12 are held together in their relative position by the closing mechanism 23 when a cable is inserted in at least one of the cable insertion regions 17. The closing mechanism 23, namely the respective locking latch 25 of the respective locking segment 24, prevents in the first lock-in position a further opening of the shells 11, 12 especially when a cable is inserted in at least one of the cable insertion regions 17. When a cable becomes inserted into a cable insertion region 17 and when the shells 11, 12 are transferred into their partially opened or partially closed status defined by first lock-in position, the cable acts on the or each compressible and/or deformable sealing elements 16 positioned in the respective cable insertion region 17. This causes spring forces and the closing mechanism 23, namely the respective locking latch 25 of the respective locking segment 24, prevents a spring opening of the shell due to such forces.

### List of reference numerals

- 10: inline cable closure
- 11: shell/lower half-shell
- 12: shell/upper half-shell
- 13: covering body
- 14: interior
- 15: side
- 16: sealing element
- 17: cable insertion region
- 18: longitudinal side
- 19: longitudinal side
- 20: hinge
- 21: longitudinal side
- 22: longitudinal side
- 23: closing mechanism
- 24: locking segment
- 25: locking latch
- 26: latch support
- 27: first end section
- 28: second end section
- 29: first end section
- 30: second end section
- 31: recess
- 32: protrusion
- 33: protrusion
- 34: recess
- 35: surface
- 36: surface

## Claims

1. A cable closure, having a housing, which delimits an interior of the cable closure and seals off the cable closure toward the outside, the housing comprising a covering body (13), the covering body (13) comprises shells (11, 12) and provides on mutually opposite sides (15) of the same cable insertion regions (17) for inserting cables into the interior of the cable closure and/or for passing cables out of the interior of the cable closure, wherein compressible and/or deformable sealing elements (16) are positioned at the mutually opposite sides (15) of the covering body (13) in the region of the cable insertion regions (17) of the shells (11, 12), wherein the shells (11, 12) can be locked together in a closed status of the cable closure by a closing mechanism (23), wherein the shells (11, 12) are hinged together at first sides (18, 19) so that the shells (11, 12) can be pivoted relative to each other when opening and closing the cable closure, and wherein the closing mechanism (23) can be used to lock the shells (11, 12) to each other at second sides (21, 22) of the same when the shells (11, 12) are in the closed position, **characterized in that** the closing mechanism (23) comprises at least one locking segment (24) having a locking latch (25) and a latch support (26), wherein the latch support (26) is with a first end section (27) pivotably attached to a first one of the shells (11), and wherein the latch support (26) is with a second end section (28) pivotably attached to the locking latch (25), wherein the locking latch (25) has a first end section (29) acting together with a second one of the shells (12) when closing and opening the cable closure, and wherein the locking latch (25) has a second end section (30) serving as an actuating handle for closing and opening the cable closure.

2. The cable closure as claimed in claim 1, **characterized in that** the latch support (26) is with the second end section (28) pivotably attached to a section of the locking latch (25) having a shorter distance to the first end section (29) of the locking latch (25) than to the second end section (30) of the same.

3. The cable closure as claimed in claim 1 or 2, **characterized in that** the latch support (26) is with the second end section (28) pivotably attached to a section of the locking latch (25) being positioned immediately adjacent to the first end section (29) of the locking latch (25).

4. The cable closure as claimed claim 2 or 3, **characterized in that** the first end section (29) of the locking latch (25) which acts together with a second one of the shells (12) when closing and opening the cable closure comprises a recess (31) and a protrusion (32), wherein the protrusion (32) provides a free end of the locking latch (25), wherein the recess (31) is positioned between the protrusion (32) and the section of the of the locking latch (25) to which the second end section (28) of the latch support (26) is pivotably attached.

5. The cable closure as claimed claim 4, **characterized in that** in a first lock-in position of the respective locking segment (24) of the closing mechanism (23) a protrusion (33) of the second one of the shells (12) projects into the recess (31) of first end section (29) of the locking latch (25) thereby fixing the relative position of the shells (11, 12) in a partially closed position of the same.

6. The cable closure as claimed claim 4 or 5, **characterized in that** in a second lock-in position of the respective locking segment (24) of the closing mechanism (23) the protrusion (32) of the first end section (29) of the locking latch (25) projects into a recess (34) of the second one of the shells (12) thereby fixing the relative position of the shells (11, 12) in a fully closed position of the same.

7. The cable closure as claimed in claim 6, **characterized in that** the respective locking segment (24) of the closing mechanism (23) is transferable between the first lock-in position and the second lock-in position and vice versa between the second lock-in position and the first lock-in position by applying a force to the second end section (30) of the locking latch (25).

8. The cable closure as claimed in claim 7, **characterized in that** for transferring the respective locking segment (24) of the closing mechanism (23) from the first lock-in position into the second lock-in position the locking latch (25) is pivotable around an axis defined by the protrusion (33) of the second one of the shells (12) and the recess (31) of first end section (29) of the locking latch (25), wherein during this transfer the protrusion (32) of the first end section (29) of the locking latch (25) becomes engaged with the recess (34) of the second one of the shells (12) while the protrusion (33) of the second one of the shells (12) becomes disengaged with the recess (31) of first end section (29) of the locking latch (25).

9. The cable closure as claimed in claims 7 to 8, **characterized in that** for transferring the respective locking segment (24) of the closing mechanism (23) from the second lock-in position into the first lock-in position the locking latch (25) is pivotable around an axis defined by the protrusion (32) of the first end section (29) of the locking latch (25) and the recess (34) of the second one of the shells (12), wherein during this transfer the protrusion (33) of the second one of the shells (12) becomes engaged with the recess (31) of first end section (29) of the locking latch (25) while the protrusion (32) of the first end section (29) of the locking latch (25) becomes disengaged with the recess (34) of the second one of the shells (12).

10. The cable closure as claimed in one of claims 5 to 9, **characterized in that** in the second lock-in position of the respective locking segment (25) of the closing mechanism (23) a surface (35) of the second end section (30) of locking latch (25) contacts a surface (36) of the second one of the shells (12).

11. The cable closure as claimed in claims 2 to 10, **characterized in that** the closing mechanism (23) comprises at least two locking segments (24) being positioned side by side and being individually lockable and un-lockable.
